# EUROPEAN PATENT APPLICATION

(11) **EP 4 753 117 A1**
(43) Date of publication of application: **03.06.2026**
(21) Application number: 24859021.8
(22) Date of filing: 05.04.2024
(51) Int. Cl.: H02K 3/18, H02K 15/095

(54) **MOTOR AND MOTOR MANUFACTURING METHOD**

(30) Priority: 31.08.2023 JP 2023141038
(71) Applicant: Kabushiki Kaisha Yaskawa Denki, Kitakyushu-shi, Fukuoka 806-0004 (JP)
(72) Inventor: MAEDA Shuhei, Kitakyushu-shi, Fukuoka 806-0004 (JP); MUKAI Shinichiro, Kitakyushu-shi, Fukuoka 806-0004 (JP); KAWAZOE Yosuke, Kitakyushu-shi, Fukuoka 806-0004 (JP); IGARI Chihiro, Kitakyushu-shi, Fukuoka 806-0004 (JP)
(74) Representative: Novagraaf International SA
(86) International application number: PCT/JP2024/014085
(87) International publication number: WO 2025/046972

(57) **Abstract**

To improve the space factor of a stator coil.

A motor includes a stator core 5 having a plurality of protrusions 18, and a plurality of coils 7 mounted on the plurality of protrusions 18 in a concentrated winding manner. Each of the coils 7 is formed by winding a conductive wire W in a plurality of layers by regular winding, and includes a slot portion 20 accommodated in a slot 19 of the stator core 5 and a coil end portion 21 disposed outside the slot 19, and an arrangement of the conductive wire W in a cross section perpendicular to a wiring direction of the conductive wire W in the slot portion 20 is different from an arrangement of the conductive wire W in the cross section in the coil end portion 21, and an outer shape of the cross section in the slot portion 20 is different from an outer shape of the cross section in the coil end portion 21.

## Description

### TECHNICAL FIELD

Embodiments of the disclosure relate to a motor and a motor manufacturing method.

### BACKGROUND ART

Patent Literature 1 describes a rotating electrical machine in which a coil wire is wound around a bobbin mounted on a stator core by regular winding.

### CITATION LIST

### PATENT LITERATURE

Patent Literature 1: JP 2014-230305 A

### SUMMARY OF INVENTION

### TECHNICAL PROBLEM

A motor capable of improving the space factor of a stator coil is required.

In light of the foregoing problems, an object of the present invention is to provide a motor and a motor manufacturing method that can improve the space factor of a stator coil.

### SOLUTION TO PROBLEM

To solve the above problem, according to an aspect of the present invention, there is provided a motor including a stator core having a plurality of protrusions, and a plurality of coils mounted on the plurality of protrusions in a concentrated winding manner, in which each of the coils is formed by winding a conductive wire in a plurality of layers by regular winding, and includes a slot portion accommodated in a slot of the stator core and a coil end portion disposed outside the slot, and an arrangement of the conductive wire in a cross section perpendicular to a wiring direction of the conductive wire in the slot portion is different from an arrangement of the conductive wire in the cross section in the coil end portion, and an outer shape of the cross section in the slot portion is different from an outer shape of the cross section in the coil end portion.

According to another aspect of the present invention, there is provided a motor including a stator core having a plurality of protrusions, and a plurality of coils mounted on the plurality of protrusions in a concentrated winding manner, in which: the coil is formed by winding a conductive wire in a plurality of layers by regular winding; each of the coils includes a first coil portion formed by winding a first conductive wire portion from an end portion on one side of the conductive wire to a predetermined intermediate position of the conductive wire in a first winding direction with the predetermined intermediate position as a starting point, and a second coil portion formed by winding a second conductive wire portion from an end portion on the other side of the conductive wire to the predetermined intermediate position of the conductive wire in a second winding direction opposite to the first winding direction with the predetermined intermediate position as a starting point; the end portion on one side and the end portion on the other side of the conductive wire are drawn out from the layer on the outer periphery of the coil; and the first coil portion and the second coil portion are adjacent to each other via a boundary portion inclined with respect to a plane perpendicular to an axis direction of the coil.

According to another aspect of the present invention, there is provided a method of manufacturing a motor including a stator core having a plurality of protrusions, and a plurality of coils mounted on the plurality of protrusions in a concentrated winding manner, the method including the step of forming each of the coils by winding a conductive wire in a plurality of layers by regular winding such that an arrangement of the conductive wire in a cross section perpendicular to a wiring direction of the conductive wire in a slot portion accommodated in a slot of the stator core and an arrangement of the conductive wire in the cross section in a coil end portion disposed outside the slot are different from each other, and an outer shape of the cross section of the slot portion and an outer shape of the cross section of the coil end portion are different from each other.

According to another aspect of the present invention, there is provided a method of manufacturing a motor including a stator core having a plurality of protrusions, and a plurality of coils mounted on the plurality of protrusions in a concentrated winding manner, the method including the steps of: forming a first coil portion by winding a first conductive wire portion from an end portion on one side of a conductive wire to a predetermined intermediate position of the conductive wire in a plurality of layers by regular winding in a first winding direction with the predetermined intermediate position as a starting point; forming a second coil portion by winding a second conductive wire portion from an end portion on the other side of the conductive wire to the predetermined intermediate position of the conductive wire in a plurality of layers by regular winding in a second winding direction opposite to the first winding direction with the predetermined intermediate position as a starting point, and winding the second conductive wire portion so as to be adjacent to the first coil portion via a boundary portion inclined with respect to a plane perpendicular to an axis direction of the coil; and drawing out the end portion on the one side and the end portion on the other side of the conductive wire from the layer on the outer periphery of the coil.

### ADVANTAGEOUS EFFECTS OF INVENTION

According to the motor and the like of the present invention, the space factor of a stator coil can be improved.

### BRIEF DESCRIPTION OF DRAWINGS

FIG. 1 is a longitudinal cross-sectional view illustrating one example of an overall configuration of a motor according to an embodiment.
FIG. 2 is a cross-sectional view corresponding to a II-II cross section in FIG. 1.
FIG. 3 is a plan view illustrating one example of the configuration of a coil as viewed from the radially outer side.
FIG. 4 is a cross-sectional view illustrating one example of a cross-sectional shape perpendicular to a rotation axis of a slot portion of a coil according to Comparative Example 1.
FIG. 5 is a cross-sectional view illustrating one example of a cross-sectional shape perpendicular to a rotation axis of a slot portion of a coil according to Comparative Example 2.
FIG. 6 is a cross-sectional view illustrating one example of a cross-sectional shape perpendicular to a rotation axis of a slot portion of the coil according to the first embodiment.
FIG. 7 is a cross-sectional view corresponding to an A-A cross section in FIG. 3, illustrating one example of the outer shape and arrangement of conductive wires in a cross section perpendicular to the wiring direction of the conductive wires in the slot portion of the coil according to the first embodiment.
FIG. 8 is a cross-sectional view corresponding to a B-B cross section in FIG. 3, illustrating one example of the outer shape and arrangement of conductive wires on a cross section perpendicular to the wiring direction of the conductive wires in the coil end portion of the coil according to the first embodiment.
FIG. 9 is a perspective view illustrating one example of an overall structure of a coil according to Comparative Example 3.
FIG. 10 is a cross-sectional view corresponding to a C-C cross section in

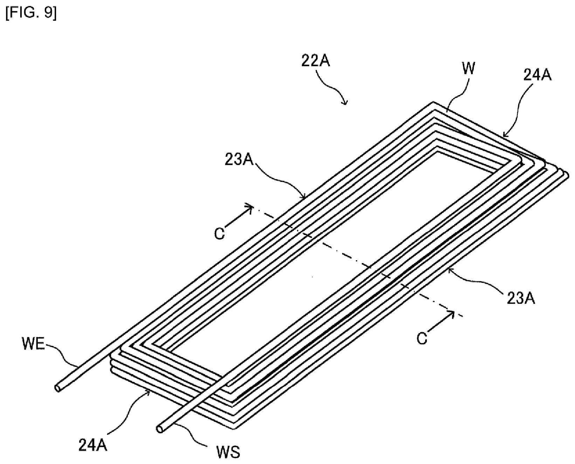

FIG. 9, illustrating one example of a cross-sectional structure of a slot portion of the coil according to Comparative Example 3.

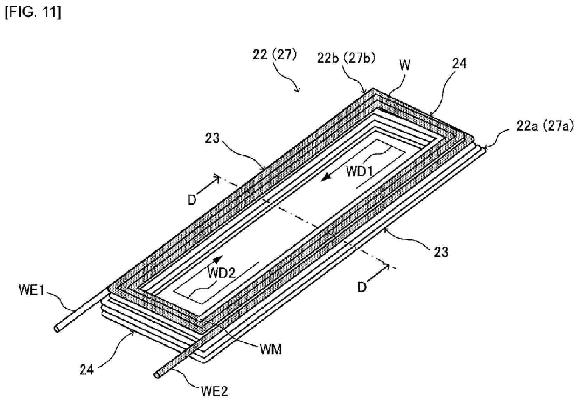

FIG. 11 is a perspective view illustrating one example of an overall structure of a coil according to a second embodiment.

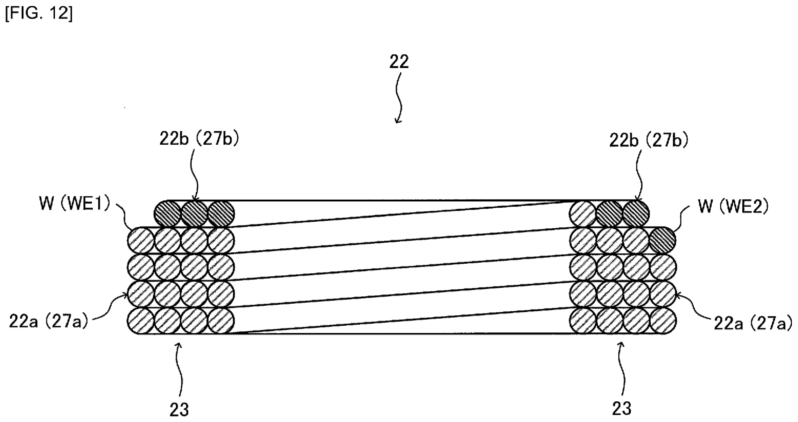

FIG. 12 is a cross-sectional view corresponding to a D-D cross section in
FIG. 11, illustrating one example of a cross-sectional structure of a slot portion of the coil according to the second embodiment.

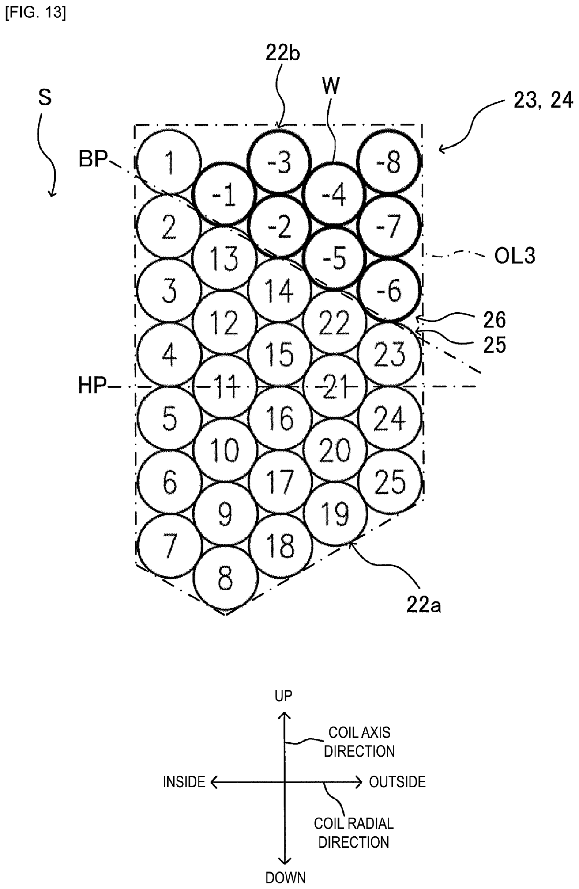

FIG. 13 is a cross-sectional view illustrating one example of the outer shape and arrangement of conductive wires in a cross section of the slot portion and a coil end portion of the coil according to the second embodiment.

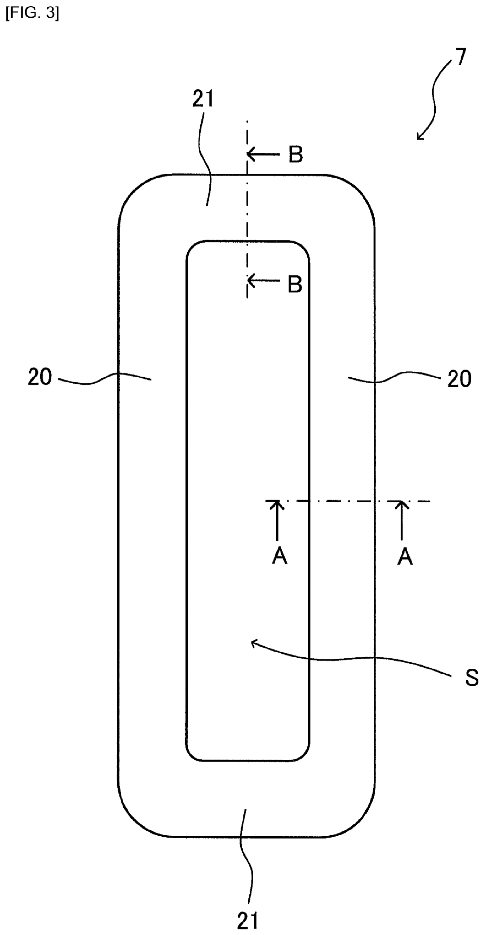

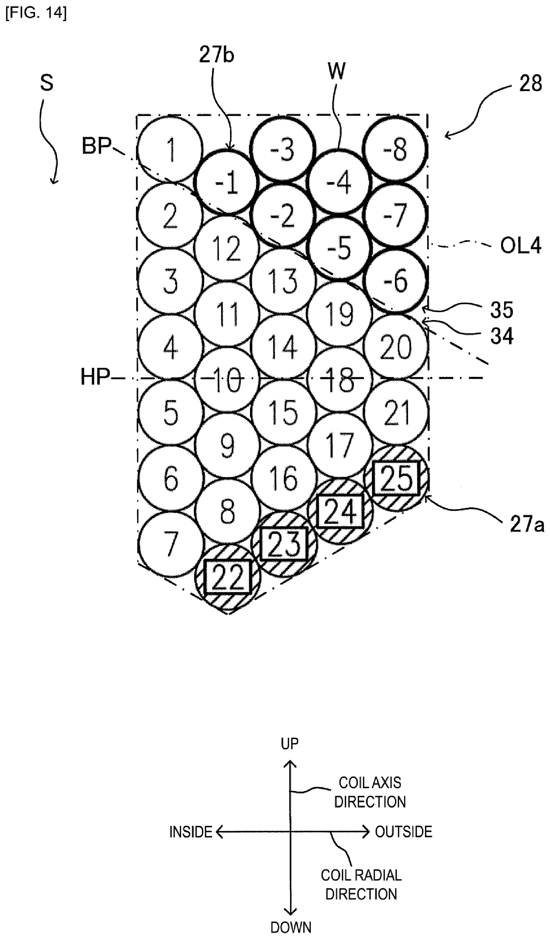

FIG. 14 is a cross-sectional view corresponding to an A-A cross section in FIG. 3, illustrating one example of the outer shape and arrangement of conductive wires in a cross section of a slot portion of a coil according to a third embodiment.

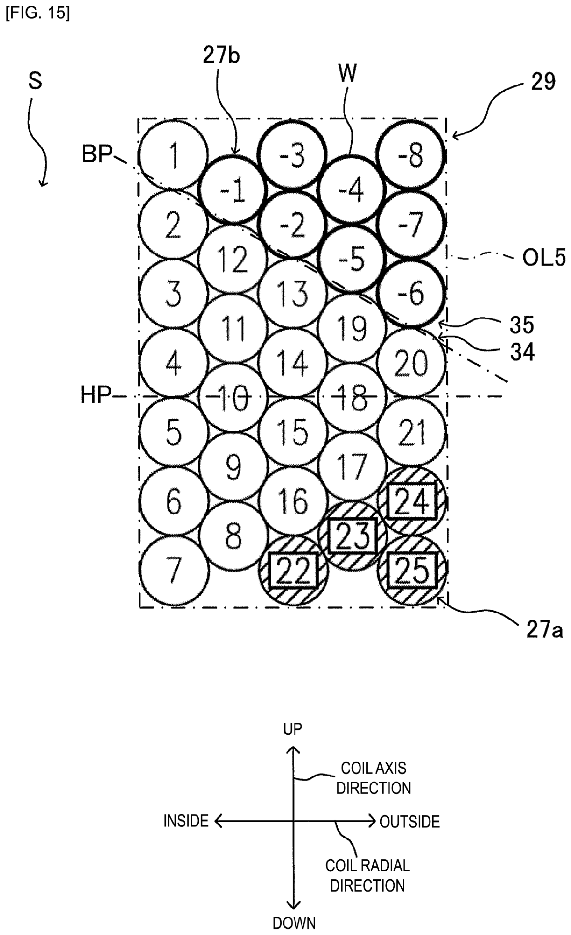

FIG. 15 is a cross-sectional view corresponding to a B-B cross section in FIG. 3, illustrating one example of the outer shape and arrangement of conductive wires in a cross section of a coil end portion of the coil according to the third embodiment.

### DESCRIPTION OF EMBODIMENTS

Embodiments will be described below with reference to the drawings.

### 1. Configuration of Motor

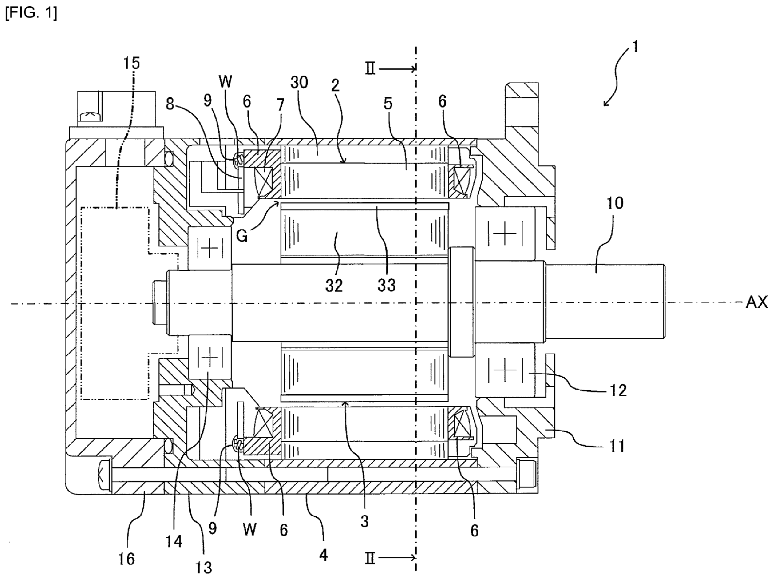

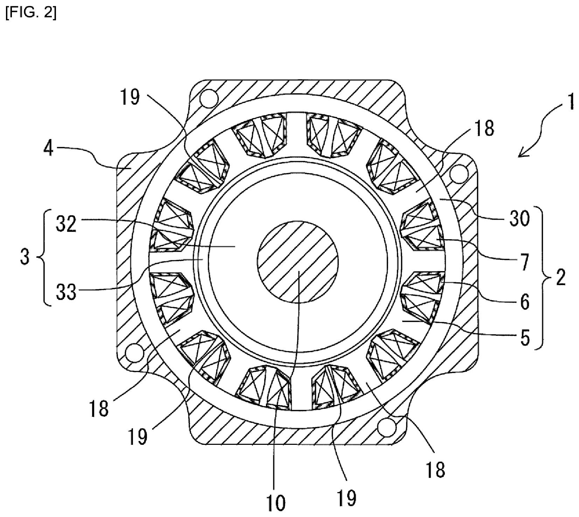

First, the configuration of a motor 1 according to an embodiment will be described. Coils of first to third embodiments described later are mounted on the motor 1. FIG. 1 is a longitudinal cross-sectional view illustrating one example of an overall configuration of the motor 1 according to the embodiment, and FIG. 2 is a cross-sectional view corresponding to a II-II cross section in FIG. 1. Note that in the embodiments, a "load side" is a direction in which a load is attached to the motor 1, that is, a direction in which a shaft 10 protrudes in the example in FIG. 1 (right side in FIG. 1), and an "opposite-to-load side" is a direction opposite to the load side, that is, a direction in which an encoder 15 is disposed with respect to the motor 1 in FIG. 1 (left side in FIG. 1). Additionally, in the embodiments, an "axis direction" is a direction along a rotation axis AX, a "circumferential direction" is a circumferential direction around the rotation axis AX, and a "radial direction" is a radial direction from the rotation axis AX.

As illustrated in FIG. 1, the motor 1 is an inner rotor type motor including a stator 2 and a rotor 3, and the rotor 3 is provided inside the stator 2. The stator 2 includes a laminated iron core ring 30, a stator core 5, bobbins 6, and coils 7. The laminated iron core ring 30 is fixed to an inner peripheral surface of a frame 4 which is a housing of the motor 1. The stator core 5 is fixed to an inner peripheral surface of the laminated core ring 30. The coils 7 are mounted on the stator core 5 via the bobbins 6. The bobbins 6 are made of an insulating material in order to electrically insulate the stator core 5 and the laminated core ring 30 from the coils 7. Each of the coils 7 is an air-core coil formed by winding a conductive wire W in a plurality of layers by regular winding. The conductive wire W is a round wire having a circular cross-sectional shape. Note that a rectangular wire having a rectangular cross-sectional shape may be used as the conductive wire W. A substrate 8 is provided on the opposite-to-load side (left side in FIG. 1) of the bobbin 6. A circuit provided on the substrate 8 is electrically connected to winding start and end portions of the conductive wire W drawn out from the coil 7 by, for example, solder 9 or the like.

The rotor 3 is fixed to the outer periphery of the shaft 10 and is disposed on the inner peripheral side of the stator 2. The rotor 3 includes a rotor core 32 and a magnet 33 provided on an outer peripheral surface of the rotor core 32. An outer peripheral surface of the magnet 33 is disposed so as to face an inner peripheral surface of the stator core 5 in the radial direction with a predetermined gap G therebetween. Note that the position of the magnet 33 is not limited to the outer peripheral surface of the rotor core 32, and the magnet 33 may be provided inside the rotor core 32. The shaft 10 is supported by a load-side bearing 12 having an outer ring fitted to a load-side bracket 11 provided on the load side (right side in FIG. 1) of the frame 4, and an opposite-to-load-side bearing 14 having an outer ring fitted to an opposite-to-load-side bracket 13 provided on the opposite-to-load side (left side in FIG. 1) of the frame 4, so as to be rotatable around the rotation axis AX. The encoder 15 for detecting the rotational position, rotational speed, or the like of the rotor 3 is provided at an opposite-to-load side end of the shaft 10. The encoder 15 is covered with an encoder cover 16. Note that a resolver or the like may be provided instead of the encoder.

As illustrated in FIG. 2, the stator core 5 includes a plurality of (e.g., 12 in FIG. 2) protrusions 18 that protrude radially outward. The plurality of protrusions 18 are formed in an annular shape with the radially inner sides thereof connected in the circumferential direction, and each protrusion 18 protrudes radially outward. Each of the coils 7 is mounted on a corresponding one of the protrusions 18 from the outer peripheral side via a corresponding one of the bobbins 6 in a concentrated winding manner. In a slot 19, which is a space between two adjacent protrusions 18, opposing sides of the coils 7 mounted on the protrusions 18 are disposed with a gap therebetween. The stator 2 is assembled by mounting a plurality of (e.g., 12 in FIG. 2) coils 7 on the respective protrusions 18 of the stator core 5 from the radially outer side via the bobbins 6, and then fixing the stator core 5 to the inner periphery of the annular laminated core ring 30, and is attached to the inner peripheral surface of the frame 4. Thereafter, a resin is press-fitted into the slot 19, and the bobbin 6, the coil 7, and the like are molded with the resin.

Note that although the embodiment is described using a case of application to a motor, application to a generator is also possible. The motor and the generator are examples of a rotating electrical machine.

### 2. First Embodiment

Next, a coil of a first embodiment will be described. In the coil of the first embodiment, the arrangement of the conductive wire is varied between a slot portion of the coil and a coil end portion of the coil, so that the outer shape of the cross section of the slot portion and the outer shape of the cross section of the coil end portion are made different from each other.

### (2-1. Configuration of Coil)

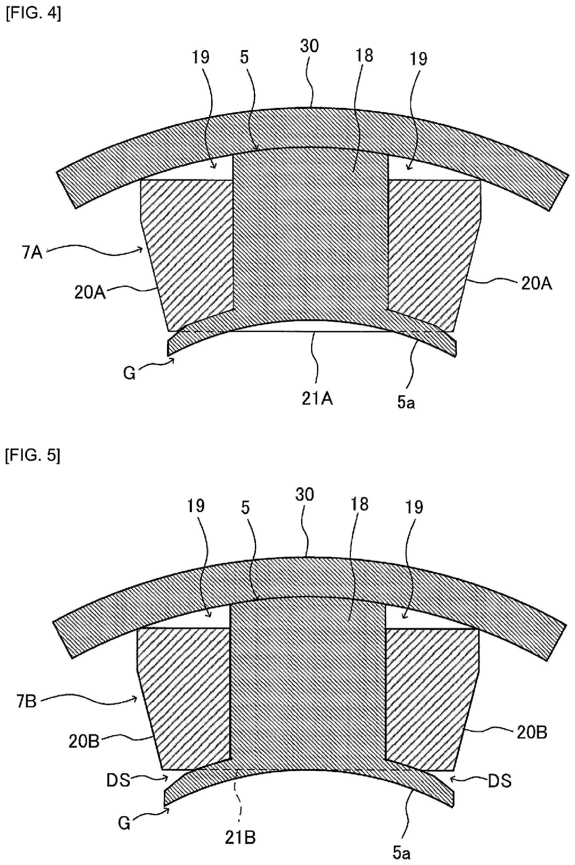

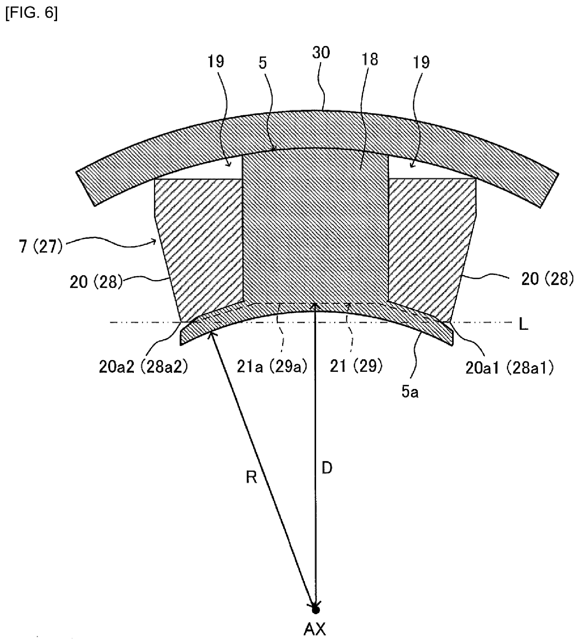

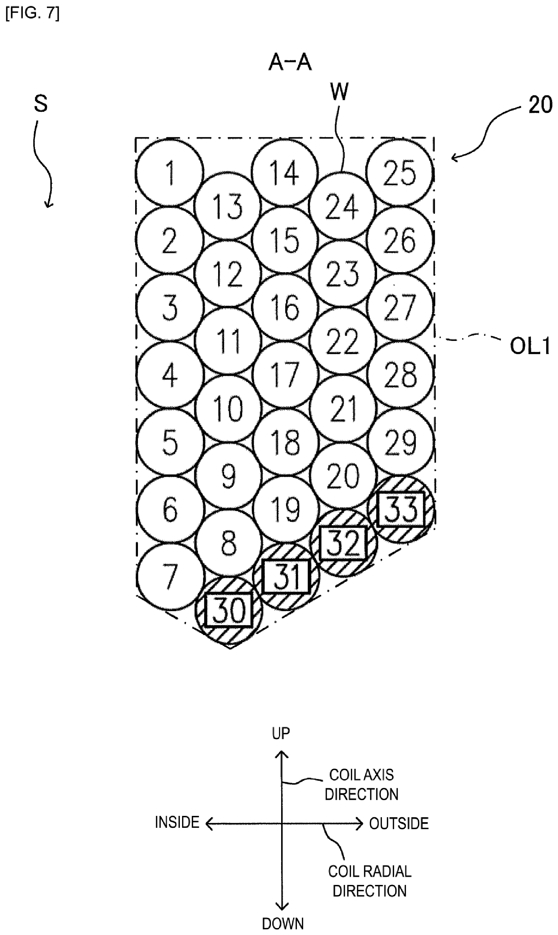

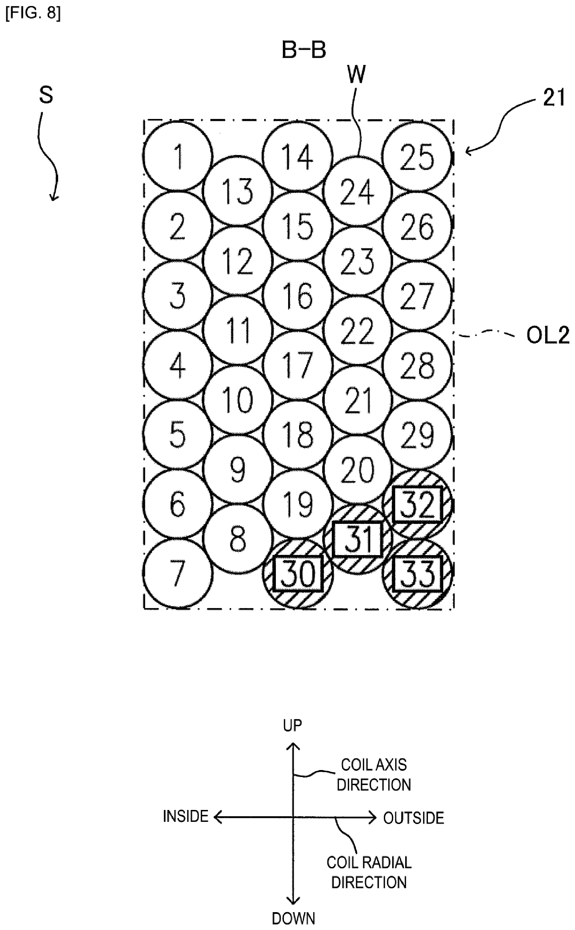

The configuration of the coil 7 according to the first embodiment will be described with reference to FIGS. 3 to 8. FIG. 3 is a plan view illustrating one example of the configuration of the coil 7 as viewed from the radially outer side, FIG. 4 is a cross-sectional view illustrating one example of the cross-sectional shape perpendicular to the rotation axis AX of a slot portion 20A of a coil 7A according to Comparative Example 1, FIG. 5 is a cross-sectional view illustrating one example of the cross-sectional shape perpendicular to the rotation axis AX of a slot portion 20B of a coil 7B according to Comparative Example 2, FIG. 6 is a cross-sectional view illustrating one example of the cross-sectional shape perpendicular to the rotation axis AX of a slot portion 20 of the coil 7 according to the first embodiment, FIG. 7 is a cross-sectional view corresponding to an A-A cross section in FIG. 3 illustrating one example of the outer shape and arrangement of the conductive wire W in a cross section perpendicular to the wiring direction of the conductive wire W in the slot portion 20 of the coil 7 according to the first embodiment, and FIG. 8 is a cross-sectional view corresponding to a B-B cross section in FIG. 3 illustrating one example of the outer shape and arrangement of the conductive wire W in a cross section perpendicular to the wiring direction of the conductive wire W in a coil end portion 21 of the coil 7 according to the first embodiment.

As illustrated in FIG. 3, the coil 7 has a pair of slot portions 20 that are accommodated in the slot 19 of the stator core 5, and a pair of coil end portions 21 that are disposed outside the slot 19. The two slot portions 20 are disposed to face each other in the circumferential direction, and the two coil end portions 21 are disposed to face each other in the axis direction. The coil 7 is formed as an air-core coil having an air core portion S which is a hollow space by winding the conductive wire W around a winding jig (not illustrated) in a plurality of layers by regular winding. The coil 7 is mounted on the protrusion 18 of the stator core 5 from the radially outer side via the bobbin 6. The protrusion 18 and the bobbin 6 are inserted into the air core portion S.

FIG. 4 illustrates one example of a cross-sectional shape of the slot portion 20A of the coil 7A according to Comparative Example 1. The coil 7A is configured such that the arrangement and the outer shape of the cross section of the slot portion 20A are substantially the same as the arrangement and the outer shape of the cross section of a coil end portion 21A. As illustrated in FIG. 4, in Comparative Example 1, the coil 7A is formed such that the outer shape of the cross section of the slot portion 20A reaches the vicinity of an inner peripheral tip of the protrusion 18 of the stator core 5. In this case, as illustrated in FIG. 4, the outer shape of the cross section of the coil end portion 21A protrudes radially inward from an inner peripheral surface 5a of the stator core 5, and there is a possibility that interference with the gap G between the stator 2 and the rotors 3 occurs.

FIG. 5 illustrates one example of a cross-sectional shape of the slot portion 20B of the coil 7B according to Comparative Example 2. As in the coil 7A of Comparative Example 1, the coil 7B is also configured such that the arrangement and outer shape of the cross section of the slot portion 20B are substantially the same as the arrangement and outer shape of the cross section of a coil end portion 21B. As illustrated in FIG. 5, in Comparative Example 2, the coil 7B is formed such that the outer shape of the cross section of the slot portion 20B does not reach the inner peripheral tip of the protrusion 18 in order to suppress the outer shape of the cross section of the coil end portion 21B from protruding radially inward from the inner peripheral surface 5a of the stator core 5. In this case, as illustrated in FIG. 5, there is a possibility that dead spaces DS in which the coil 7B is not disposed are generated in the vicinity of the inner peripheral tip of the protrusion 18 in the slots 19, which leads to a decrease in the space factor in the slots 19.

FIG. 6 illustrates one example of a cross-sectional shape of the slot portion 20 of the coil 7 according to the first embodiment. The coil 7 is configured such that the arrangement of the conductive wire W is varied between the slot portion 20 and the coil end portion 21, so that the outer shape of the cross section is varied between the slot portion 20 and the coil end portion 21. To be specific, as illustrated in FIG. 6, the coil 7 is configured such that a radially inner surface 21a of the coil end portion 21 is located radially outside a straight line L connecting a portion 20a1 of the slot portion 20 on one side closest to the rotation axis AX and a portion 20a2 of the slot portion 20 on the other side closest to the rotation axis AX. The coil 7 is configured such that a shortest radial distance D between the coil end portion 21 and the rotation axis AX is greater than a radial distance R between the inner peripheral surface 5a of the stator core 5 and the rotation axis AX. Note that the shortest distance D and the distance R may be substantially equal to each other. The distance R is the inner diameter of the stator core 5. Additionally, the coil 7 is configured such that at least part of the straight line L is located radially inside the inner peripheral surface 5a of the stator core 5.

FIGS. 7 and 8 illustrate examples of the outer shape and arrangement of the conductive wire W of the cross sections of the slot portion 20 and the coil end portion 21 of the coil 7. In FIGS. 7 and 8, the numbers inside the conductive wires W indicate one example of the winding order of regular winding.

As illustrated in FIGS. 7 and 8, the arrangement of the conductive wire W in the slot portion 20 and the arrangement of the conductive wire W in the coil end portion 21 are common to each other in a part, and differ from each other in another portion other than the part. In FIGS. 7 and 8, the conductive wire W indicated in white is a conductive wire having an arrangement common to the slot portion 20 and the coil end portion 21, and the conductive wire W indicated by diagonal hatching is a conductive wire having different arrangements in the slot portion 20 and the coil end portion 21. As illustrated in FIGS. 7 and 8, the conductive wire W having a different arrangement is disposed in the vicinity of the end portion on the rotation axis AX side.

Specifically, as illustrated in FIG. 7, in the slot portion 20, the conductive wire W starts being wound at an upper end position in the coil axis direction in the first layer on the innermost side in the coil radial direction (No. 1), and is sequentially wound from the upper end position toward the lower side (No. 1 to No. 7). When the lower end of the first layer is reached (No. 7), the winding is moved to a second position from the lower end of the second layer outside the first layer (No. 8), and the conductive wire W is sequentially wound toward the upper side (No. 8 to No. 13). When the upper end of the second layer is reached (No. 13), the winding is moved to the upper end of the third layer outside the second layer (No. 14), and the conductive wire W is sequentially wound toward the lower side (No. 14 to No. 19). When the second position from the lower end of the third layer is reached (No. 19), the winding is moved to the second position from the lower end of the fourth layer outside the third layer (No. 20), and the conductive wire W is sequentially wound toward the upper side (No. 20 to No. 24). When the upper end of the fourth layer is reached (No. 24), the winding is moved to the upper end of the fifth layer, which is the outermost layer (No. 25), and the conductive wire W is sequentially wound toward the lower side (No. 25 to No. 29). When the second position from the lower end of the fifth layer is reached (No. 29), the winding is completed by moving to the lower end position of the second layer (No. 30), moving to the lower end position of the third layer (No. 31), moving to the lower end position of the fourth layer (No. 32), and finally moving to the lower end position of the fifth layer (No. 33). As a result of winding the conductive wire W in the above-described arrangement, an outer shape OL1 of the cross section of the slot portion 20 has a substantially pentagonal shape having a vertex protruding downward in the coil axis direction, that is, inward in the radial direction of the motor 1.

As illustrated in FIG. 8, in the coil end portion 21, the conductive wire W is wound from No. 1 to No. 29 in the same manner as in the slot portion 20. When the third position from the lower end of the fifth layer is reached (No. 29), the winding is completed by moving to the lower end position of the third layer (No. 30), moving to the lower end position of the fourth layer (No. 31), moving to the second position from the lower end of the fifth layer (No. 32), and being finally wound at the lower end position of the fifth layer (No. 33). As a result of winding the conductive wire W in the above-described arrangement, an outer shape OL2 of the cross section of the coil end portion 21 has a substantially quadrangular shape in which both the upper side and the lower side in the coil axis direction are substantially flat.

As described above, the coil 7 is formed by winding the conductive wire W in a plurality of layers by regular winding such that the arrangement of the conductive wire W in the cross section perpendicular to the wiring direction of the conductive wire W in the slot portion 20 accommodated in the slot 19 of the stator core 5 and the arrangement of the conductive wire W in the cross section in the coil end portion 21 disposed outside the slot 19 are different from each other, and the outer shape of the cross section of the slot portion 20 and the outer shape of the cross section of the coil end portion 21 are different from each other. The procedure of forming the coil 7 is one example of a motor manufacturing method.

Note that the number of turns and winding order of the conductive wire W described above are one example, and may be set otherwise. For example, the arrangement of the conductive wire W in the slot portion 20 and the arrangement of the conductive wire W in the coil end portion 21 may differ in regions other than the end portion on the rotation axis AX side, or may be different in the entire region rather than just a portion thereof, in the cross section.

### (2-2. Effects of First Embodiment)

According to the first embodiment described above, by making the outer shape OL1 of the cross section of the slot portion 20 of the coil 7 and the outer shape OL2 of the cross section of the coil end portion 21 different from each other, the outer shape OL1 of the cross section of the slot portion 20 can be formed into a shape reaching the inner peripheral tip of the protrusion 18 of the stator core 5, and the outer shape OL2 of the cross section of the coil end portion 21 can be formed into a shape not protruding radially inward from the inner peripheral surface 5a of the stator core 5. Therefore, the space factor of the stator coil can be improved while preventing interference of the stator coil with the gap G. Furthermore, since the cross-sectional shape is changed by varying the arrangement of the conductive wire W between the slot portion 20 and the coil end portion 21, the outer shape can be varied between the slot portion 20 and the coil end portion 21 without performing pressure molding or the like. As a result, the manufacturing process can be simplified and the manufacturing cost can be reduced.

Additionally, in the present embodiment, the coil 7 may be configured such that, when viewed in a cross section perpendicular to the rotation axis AX, the radially inner surface 21a of the coil end portion 21 is located radially outside the straight line L connecting the portion 20a1 of the slot portion 20 on one side closest to the rotation axis AX and the portion 20a2 of the slot portion 20 on the other side closest to the rotation axis AX. As a result, the conductive wire W can be disposed in the slot portion 20 up to the inner peripheral tip of the protrusion 18, and the conductive wire W can be disposed in the coil end portion 21 so as not to protrude radially inward from the inner peripheral surface 5a of the stator core 5.

Moreover, in the present embodiment, the coil 7 may be configured such that the shortest radial distance D between the coil end portion 21 and the rotation axis AX is greater than the radial distance R between the inner peripheral surface 5a of the stator core 5 and the rotation axis AX. As a result, the coil end portion 21 can be disposed radially outward of the inner peripheral surface 5a of the stator core 5. Therefore, interference of the coil end portion 21 with the gap G can be prevented.

Additionally, in the present embodiment, when viewed in a cross section perpendicular to the rotation axis AX, the coil 7 may be configured such that at least part of the straight line L connecting the portion 20a1 of the slot portion 20 on one side closest to the rotation axis AX and the portion 20a2 of the slot portion 20 on the other side closest to the rotation axis AX is located radially inside the inner peripheral surface 5a of the stator core 5. As a result, the conductive wire W can be disposed in the slot portion 20 up to the very end of the inner peripheral tip of the protrusions 18, and interference of the coil end portion 21 with the gap G can be prevented.

Moreover, in the present embodiment, the coil 7 may be configured such that the arrangement of the slot portion 20 and the arrangement of the coil end portion 21 are common to each other in a part and differ from each other in another portion other than the part. This facilitates the winding work of the conductive wire W as compared with a case of varying the entire arrangement of the slot portion 20 and the coil end portion 21.

Additionally, in the present embodiment, the coil 7 may be configured such that a portion where the arrangement of the slot portion 20 and the arrangement of the coil end portion 21 are different is disposed in the vicinity of the end portion on the rotation axis AX side. This makes it possible to vary the shapes of the slot portion 20 and the coil end portion 21 of the coil 7 on the inner peripheral side. For example, the inner peripheral surface of the coil end portion 21 may be curved radially outward from the inner peripheral surface of the slot portion 20.

### 3. Second Embodiment

Next, a coil of a second embodiment will be described. The coil of the second embodiment is formed by a winding method (so-called alpha winding) in which both end portions of the coil are drawn out from the outer periphery of the coil.

### (3-1. Configuration of Coil)

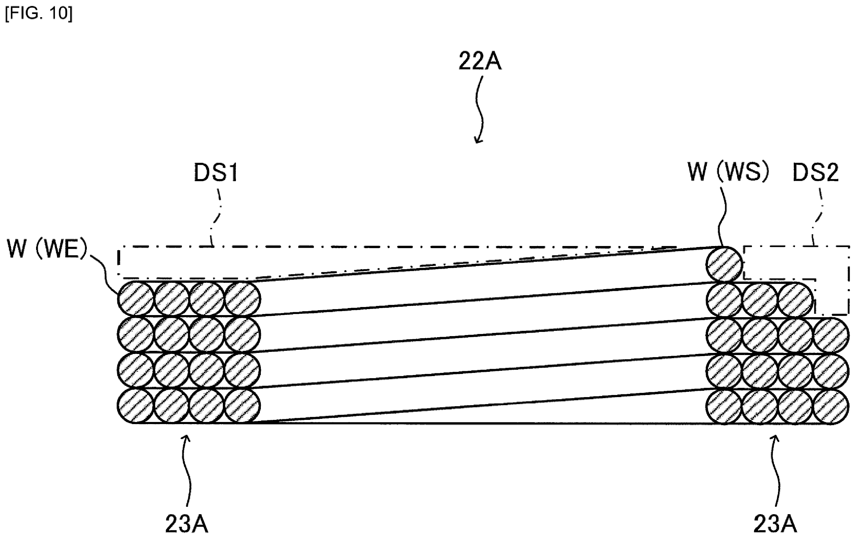

The configuration of a coil 22 according to the second embodiment will be described with reference to FIGS. 9 to 13. FIG. 9 is a perspective view illustrating one example of an overall structure of a coil 22A according to Comparative Example 3, FIG. 10 is a cross-sectional view corresponding to a C-C cross section in FIG. 9 illustrating one example of a cross-sectional structure of a slot portion 23A of the coil 22A according to Comparative Example 3, FIG. 11 is a perspective view illustrating one example of an overall structure of the coil 22 according to the second embodiment, FIG. 12 is a cross-sectional view corresponding to a D-D cross section in FIG. 11 illustrating one example of a cross-sectional structure of a slot portion 23 of the coil 22 according to the second embodiment, and FIG. 13 is a cross-sectional view illustrating one example of the outer shape and arrangement of a conductive wire W on a cross section perpendicular to the wiring direction of the conductive wire W in the slot portion 23 and a coil end portion 24 of the coil 22 according to the second embodiment. Note that in FIGS. 9 to 12, the number of turns and the number of layers of the conductive wire W are simplified.

FIGS. 9 and 10 illustrate one example of an overall structure of the coil 22A and a cross-sectional structure of the slot portion 23A according to Comparative Example 3. The coil 22A is configured such that the arrangement and outer shape of the cross section of the slot portion 23A are substantially the same as the arrangement and outer shape of the cross section of a coil end portion 24A. As illustrated in FIGS. 9 and 10, in the coil 22A of Comparative Example 3, a winding start end WS of the conductive wire W is located on the inner peripheral side because the conductive wire W is wound from the inner peripheral side and drawn out from the outer peripheral side. Therefore, in order to draw out the winding start end WS to the outside, for example, dead spaces DS1 and DS2 illustrated in FIG. 10 are generated, which leads to a decrease in space factor. Furthermore, for example, when a clearance groove is formed in a bobbin 6, the clearance groove becomes a factor inhibiting the improvement of the space factor in a slot 19.

FIGS. 11 and 12 illustrate one example of an overall structure of the coil 22 and a cross-sectional structure of the slot portion 23 according to the second embodiment. The coil 22 is configured such that the arrangement and outer shape of the cross section of the slot portion 23 are substantially the same as the arrangement and outer shape of the cross section of a coil end portion 24. As illustrated in FIGS. 11 and 12, the coil 22 includes a first coil portion 22a and a second coil portion 22b. The first coil portion 22a is formed by winding the conductive wire W (one example of first conductive wire portion) from an end portion WE1 on one side of the conductive wire W to an intermediate position WM (one example of predetermined intermediate position) in a winding direction WD1 (one example of first winding direction) with the intermediate position WM as a starting point. The second coil portion 22b is formed by winding the conductive wire W (one example of second conductive wire portion) from an end portion WE2 on the other side of the conductive wire W to the intermediate position WM in a winding direction WD2 (one example of second winding direction) opposite to the winding direction WD1 with the intermediate position WM as a starting point. The first coil portion 22a and the second coil portion 22b are connected to be continuous at the intermediate position WM, and form one conductive wire W. The end portion WE1 on one side and the end portion WE2 on the other side of the conductive wire W are drawn out from the outermost layer of the coil 22. Note that in FIG. 11, to facilitate understanding, the first coil portion 22a is illustrated in white, and the second coil portion 22b is illustrated by dot hatching, and in FIG. 12, the first coil portion 22a is illustrated by wide oblique hatching, and the second coil portion 22b is illustrated by narrow oblique hatching.

With the above configuration, both the end portions WE1 and WE2 of the coil 22 can be drawn out from the outer periphery of the coil 22. As a result, dead space can be reduced, and a clearance groove or the like of the bobbin 6 is not required, so that the space factor of the stator coil can be improved.

FIG. 13 illustrates one example of the outer shape and arrangement of the conductive wire W in the slot portion 23 and the coil end portion 24 of the coil 22. Note that in FIG. 13, the numbers inside the conductive wires W indicate one example of the winding order of regular winding, the numbers without a sign indicate the winding order of the first coil portion 22a, and the numbers with a negative sign indicate the winding order of the second coil portion 22b.

As illustrated in FIG. 13, the first coil portion 22a of the conductive wire W starts being wound at an upper end position in the coil axis direction in the first layer on the innermost side in the coil radial direction (No. 1), is wound in the winding direction WD1, and is sequentially wound from the upper end position toward the lower side (No. 1 to No. 7). When the lower end of the first layer is reached (No. 7), the winding is moved to the lower end of the second layer outside the first layer (No. 8), and the conductive wire W is sequentially wound toward the lower side (No. 8 to No. 13). When the second position from the upper end of the second layer is reached (No. 13), the winding is moved to the third position from the upper end of the third layer outside the second layer (No. 14), and the conductive wire W is sequentially wound toward the lower side (No. 14 to No. 18). When the lower end of the third layer is reached (No. 18), the winding is moved to the lower end of the fourth layer outside the third layer (No. 19), and the conductive wire W is sequentially wound toward the upper side (No. 19 to No. 22). When the third position from the upper end of the fourth layer is reached (No. 22), the winding is moved to the fourth position from the upper end of the fifth layer which is the outermost layer (No. 23), and the conductive wire W is sequentially wound downward (No. 23 to No. 25). When the winding reaches the lower end position of the fifth layer, the winding ends (No. 25), and the conductive wire W is drawn out as the end portion WE1 on one side.

The second coil portion 22b of the conductive wire W starts being wound at an upper end position in the coil axis direction in the first layer on the innermost side in the coil radial direction (No. 1), is wound in the winding direction WD2 opposite to the winding direction WD1, the winding is moved to the upper end position in the second layer (No. -1), moved to the second position from the upper end in the third layer (No. -2), and the conductive wire W is sequentially wound upward (No. -2 to No. -3). When the upper end of the third layer is reached (No. -3), the winding is moved to the upper end of the fourth layer (No. -4), and the conductive wire W is sequentially wound downward (No. -4 to No. -5). When the second position from the upper end of the fourth layer is reached (No. -5), the winding is moved to the third position from the upper end of the fifth layer (No. -6), and the conductive wire W is sequentially wound upward (No. -6 to No. -8). When the winding reaches the upper end position of the fifth layer, the winding ends (No. -8), and the conductive wire W is drawn out as the end portion WE2 on the other side.

As a result of winding the conductive wire W in the above-described arrangement, an outer shape OL3 of the cross section of the slot portion 23 and the coil end portion 24 has a substantially pentagonal shape having a vertex protruding downward in the coil axis direction, that is, inward in the radial direction of the motor 1.

As illustrated in FIG. 13, the first coil portion 22a and the second coil portion 22b are disposed adjacent to each other with a boundary portion BP therebetween, the boundary portion BP being inclined with respect to a plane HP perpendicular to the axis direction of the coil. In addition, the first coil portion 22a and the second coil portion 22b are disposed such that an uneven portion 25 (one example of first uneven portion) formed by the arrangement of the conductive wire W of the first coil portion 22a and an uneven portion 26 (one example of second uneven portion) formed by the arrangement of the conductive wire W of the second coil portion 22b are fitted to each other in the boundary portion BP. The uneven portions 25 and 26 are formed by bulges formed by the circular shape of each conductive wire W and recesses formed by gaps between adjacent conductive wires W, and the uneven portion 25 of the first coil portion 22a and the uneven portion 26 of the second coil portion 22b are alternately engaged with each other to be fitted. In addition, at least part of the first coil portion 22a, such as the conductive wire W No. 1 and No. 2 in FIG. 13 is disposed to be interposed between the second coil portion 22b and the air core portion S.

As described above, the coil 22 is formed by forming the first coil portion 22a by winding a portion of the conductive wire W from the end portion WE1 on one side to the predetermined intermediate position WM in a plurality of layers by regular winding in the winding direction WD1 from the predetermined intermediate position WM as a starting point, forming the second coil portion 22b by winding a portion of the conductive wire W from the end portion WE2 on the other side to the predetermined intermediate position WM in a plurality of layers by regular winding in the winding direction WD2 opposite to the winding direction WD1 from the predetermined intermediate position WM as a starting point and winding the portion so as to be adjacent to the first coil portion 22a via the boundary portion BP inclined with respect to a surface perpendicular to the axis direction of the coil 22, and drawing out the end portion WE1 on one side and the end portion WE2 on the other side of the conductive wire W from the layer on the outer periphery of the coil 22. The procedure of forming the coil 22 is one example of a motor manufacturing method.

Note that the number of turns and winding order of the conductive wire W described above are one example, and may be set otherwise. For example, the ratio of the second coil portion 22b in the arrangement of the conductive wire W in the cross sections of the slot portion 23 and the coil end portion 24 may be further increased or further decreased.

### (3-2. Effects of Second Embodiment)

According to the second embodiment described above, both the end portions WE1 and WE2 of the coil 22 can be drawn out from the outer periphery of the coil 22. As a result, dead space can be reduced, and a clearance groove or the like of the bobbin 6 is not required, so that the space factor of the stator coil can be improved. Furthermore, since the first coil portion 22a and the second coil portion 22b are adjacent to each other via the inclined boundary portion BP, it is possible to improve the space factor by preventing a wasteful gap between the first coil portion 22a and the second coil portion 22b. It is also possible to prevent winding collapse during winding work by inclining the boundary portion BP, and the winding work becomes easy.

Moreover, in the present embodiment, the coil 22 may be configured such that the uneven portion 25 formed by the arrangement of the conductive wire W of the first coil portion 22a and the uneven portion 26 formed by the arrangement of the conductive wire W of the second coil portion 22b are fitted to each other at the boundary portion BP. As a result, the gap between the first coil portion 22a and the second coil portion 22b can be further reduced, and thus the space factor can be improved. Additionally, since winding collapse during winding work can be prevented by the fitting of the uneven portions, the winding work becomes easy.

Additionally, in the present embodiment, the coil 22 may be configured such that at least part of the first coil portion 22a is interposed between the second coil portion 22b and the air core portion S. As a result, the second coil portion 22b can be wound so as to ride on a layer on the outer peripheral side of the first coil portion 22a. This facilitates the winding work.

### 4. Third Embodiment

Next, a coil of a third embodiment will be described. The coil of the third embodiment is formed by a winding method (so-called alpha winding) in which the arrangement of the conductive wire is varied between the slot portion of the coil and the coil end portion of the coil, so that the outer shape of the cross section is varied between the slot portion and the coil end portion, and both end portions of the coil are drawn out from the outer periphery of the coil. That is, the third embodiment is an embodiment having both features of the first embodiment and the second embodiment described above.

### (4-1. Configuration of Coil)

A coil 27 according to the third embodiment is an air-core coil including an air core portion S having a pair of slot portions 28 and a pair of coil end portions 29, similarly to the coils 7 and 22 described above. The coil 27 has the same configuration as that illustrated in FIG. 6. That is, as illustrated in FIG. 6, the coil 27 is configured such that a radially inner surface 29a of the coil end portion 29 is located radially outside a straight line L connecting a portion 28a1 of the slot portion 28 on one side closest to a rotation axis AX and a portion 28a2 of the slot portion 28 on the other side closest to the rotation axis AX. The coil 27 is configured such that a shortest radial distance D between the coil end portion 29 and the rotation axis AX is greater than a radial distance R between an inner peripheral surface 5a of a stator core 5 and the rotation axis AX. Note that the shortest distance D and the distance R may be equal to each other. Additionally, the coil 27 is configured such that at least part of the straight line L is located radially inside the inner peripheral surface 5a of the stator core 5.

Moreover, the coil 27 has the same configuration as that illustrated in FIGS. 11 and 12. That is, as illustrated in FIGS. 11 and 12, the coil 27 includes a first coil portion 27a and a second coil portion 27b. The first coil portion 27a is formed by winding a conductive wire W from an end portion WE1 on one side of the conductive wire W to an intermediate position WM in a winding direction WD1 with the intermediate position WM as a starting point. The second coil portion 27b is formed by winding the conductive wire W from an end portion WE2 on the other side of the conductive wire W to the intermediate position WM in a winding direction WD2 with the intermediate position WM as a starting point. The first coil portion 27a and the second coil portion 27b are connected to be continuous at the intermediate position WM, and form one conductive wire W. The end portion WE1 on one side and the end portion WE2 on the other side of the conductive wire W are drawn out from the outermost layer of the coil 27.

FIGS. 14 and 15 illustrate one example of the outer shape and arrangement of the conductive wire W in the slot portion 28 and the coil end portion 29 of the coil 27 according to the third embodiment. FIG. 14 is a cross-sectional view corresponding to an A-A cross section in FIG. 3, illustrating one example of the outer shape and arrangement of the conductive wire W in a cross section perpendicular to the wiring direction of the conductive wire W in the slot portion 28 of the coil 27 according to the third embodiment, and FIG. 15 is a cross-sectional view corresponding to a B-B cross section in FIG. 3, illustrating one example of the outer shape and arrangement of the conductive wire W in a cross section perpendicular to the wiring direction of the conductive wire W in the coil end portion 29 of the coil 27 according to the third embodiment. Note that in FIGS. 14 and 15, the numbers inside the conductive wires W indicate one example of the winding order of regular winding, the numbers without a sign indicate the winding order of the first coil portion 27a, and the numbers with a negative sign indicate the winding order of the second coil portion 27b.

As illustrated in FIGS. 14 and 15, the arrangement of the conductive wire W in the slot portion 28 and the arrangement of the conductive wire W in the coil end portion 29 are common to each other in a part, and differ from each other in another portion other than the part. In FIGS. 14 and 15, the conductive wire W indicated in white is a conductive wire having an arrangement common to the slot portion 28 and the coil end portion 29, and the conductive wire W indicated by diagonal hatching is a conductive wire having different arrangements in the slot portion 28 and the coil end portion 29. As illustrated in FIGS. 14 and 15, the conductive wire W having a different arrangement is disposed in the vicinity of the end portion on the rotation axis AX side.

As illustrated in FIG. 14, in the slot portion 28, the first coil portion 27a of the conductive wire W starts being wound at an upper end position in the coil axis direction in the first layer on the innermost side in the coil radial direction (No. 1), is wound in a winding direction WD1, and is sequentially wound from the upper end position toward the lower side (No. 1 to No. 7). When the lower end of the first layer is reached (No. 7), the winding is moved to a second position from the lower end of the second layer outside the first layer (No. 8), and the conductive wire W is sequentially wound toward the upper side (No. 8 to No. 12). When the second position from the upper end of the second layer is reached (No. 12), the winding is moved to the third position from the upper end of the third layer outside the second layer (No. 13), and the conductive wire W is sequentially wound toward the lower side (No. 13 to No. 16). When the second position from the lower end of the third layer is reached (No. 16), the winding is moved to the second position from the lower end of the fourth layer outside the third layer (No. 17), and the conductive wire W is sequentially wound toward the upper side (No. 17 to No. 19). When the third position from the upper end of the fourth layer is reached (No. 19), the winding is moved to the fourth position from the upper end of the fifth layer which is the outermost layer (No. 20), and the conductive wire W is sequentially wound downward (No. 20 to No. 21). When the second position from the lower end of the fifth layer is reached (No. 21), the winding is moved to the lower end position of the second layer (No. 22), moved to the lower end position of the third layer (No. 23), moved to the lower end position of the fourth layer (No. 24), and the winding is completed by finally moving to the lower end position of the fifth layer (No. 25), and the conductive wire W is drawn out as the end portion WE1 on one side.

The second coil portion 27b of the conductive wire W starts being wound at an upper end position in the coil axis direction in the first layer on the innermost side in the coil radial direction (No. 1), is wound in the winding direction WD2 opposite to the winding direction WD1, the winding is moved to the upper end position in the second layer (No. -1), moved to the second position from the upper end in the third layer (No. -2), and the conductive wire W is sequentially wound upward (No. -2 to No. -3). When the upper end of the third layer is reached (No. -3), the winding is moved to the upper end of the fourth layer (No. -4), and the conductive wire W is sequentially wound downward (No. -4 to No. -5). When the second position from the upper end of the fourth layer is reached (No. -5), the winding is moved to the third position from the upper end of the fifth layer (No. -6), and the conductive wire W is sequentially wound upward (No. -6 to No. -8). When the winding reaches the upper end position of the fifth layer, the winding ends (No. -8), and the conductive wire W is drawn out as the end portion WE2 on the other side.

As a result of winding the conductive wire W in the above-described arrangement, an outer shape OL4 of the cross section of the slot portion 28 has a substantially pentagonal shape having a vertex protruding downward in the coil axis direction, that is, inward in the radial direction of the motor 1.

As illustrated in FIG. 15, in the coil end portion 29, the first coil portion 27a of the conductive wire W is wound from No. 1 to No. 21 in the same manner as in the slot portion 28. When the third position from the lower end of the fifth layer is reached (No. 21), the winding is completed by moving to the lower end position of the third layer (No. 22), moving to the lower end position of the fourth layer (No. 23), moving to the second position from the lower end of the fifth layer (No. 24), and being finally wound at the lower end position of the fifth layer (No. 25). The second coil portion 27b of the conductive wire W is wound in the same manner as the slot portion 28 for all of No. -1 to No. -8. As a result of winding the conductive wire W in the above-described arrangement, an outer shape OL5 of the cross section of the coil end portion 29 has a substantially quadrangular shape in which both the upper side and the lower side in the coil axis direction are substantially flat.

As illustrated in FIGS. 14 and 15, the first coil portion 27a and the second coil portion 27b are disposed adjacent to each other with a boundary portion BP therebetween, the boundary portion BP being inclined with respect to a plane HP perpendicular to the axis direction of the coil. In addition, the first coil portion 27a and the second coil portion 27b are disposed such that an uneven portion 34 (one example of first uneven portion) formed by the arrangement of the conductive wire W of the first coil portion 27a and an uneven portion 35 (one example of second uneven portion) formed by the arrangement of the conductive wire W of the second coil portion 27b are fitted to each other in the boundary portion BP. In addition, at least part of the first coil portion 27a, such as the conductive wire W No. 1 and No. 2 in FIGS. 14 and 15, is disposed to be interposed between the second coil portion 27b and the air core portion S.

As described above, the coil 27 is formed by forming the first coil portion 27a by winding a portion of the conductive wire W from the end portion WE1 on one side to the predetermined intermediate position WM in a plurality of layers by regular winding in the winding direction WD1 from the predetermined intermediate position WM as a starting point, forming the second coil portion 27b by winding a portion of the conductive wire W from the end portion WE2 on the other side to the predetermined intermediate position WM in a plurality of layers by regular winding in the winding direction WD2 opposite to the winding direction WD1 from the predetermined intermediate position WM as a starting point and winding the portion so as to be adjacent to the first coil portion 27a via the boundary portion BP inclined with respect to a surface perpendicular to the axis direction of the coil 27, and drawing out the end portion WE1 on one side and the end portion WE2 on the other side of the conductive wire W from the layer on the outer periphery of the coil 27. The procedure of forming the coil 27 is one example of the motor manufacturing method.

Note that the number of turns and winding order of the conductive wire W described above are one example, and may be set otherwise. For example, the arrangement of the conductive wire W in the slot portion 28 and the arrangement of the conductive wire W in the coil end portion 29 may differ in regions other than the end portion on the rotation axis AX side, or may be different in the entire region rather than just a portion thereof, in the cross section. Furthermore, for example, the ratio of the second coil portion 27b in the arrangement of the conductive wire W in the cross sections of the slot portion 28 and the coil end portion 29 may be further increased or further decreased.

### (4-2. Effects of Third Embodiment)

According to the third embodiment described above, both the effects of the first embodiment and the effects of the second embodiment described above can be obtained.

### 5. Modified Examples

The embodiment of the present disclosure is not limited to the above, and various modifications are possible without departing from the spirit and technical ideas of the present disclosure.

For example, the coils 7, 22, and 27 may be subjected to pressure molding, and the conductive wire W may be molded into a predetermined shape by plastic deformation due to the pressure. The predetermined shape is, for example, a shape corresponding to the slot 19 or the bobbin 6. This can further reduce the gaps between the conductive wires W, thereby further increasing the space factor.

In addition, in the embodiments, a case where the cross-sectional shape of the boundary portion BP is substantially linear is illustrated in FIGS. 13 to 15, but the cross-sectional shape of the boundary portion BP is not limited to the substantially linear shape, and may be, for example, a stepped shape having steps or a zigzag shape in which a straight line is bent many times.

In the above description, when "perpendicular", "parallel", "planar", and the like are used, the meanings are not construed strictly. That is, "perpendicular", "parallel", and "planar" mean "substantially perpendicular", "substantially parallel", and "substantially planar", respectively, with allowance for design and manufacturing tolerances and errors.

In the above description, when "the same", "identical", "equal", "different", and the like are used in reference to the external dimensions and sizes, shapes, positions, or the like, the meanings are not construed strictly. That is, "the same", "identical", "equal", and "different" mean "substantially the same", "substantially identical", "substantially equal", and "substantially different", respectively, with allowance for design and manufacturing tolerances and errors.

In addition to what has already been described above, the techniques according to the embodiments and the modifications may be used in combination as appropriate. Also, while examples are not described, various alterations may be made to the above-described embodiment and modifications within a range that does not depart from the technical scope thereof.

The problems to be solved and effects of the above-described embodiments and modifications are not limited to the contents described above. The embodiments, modifications, or the like may solve a problem not described above or produce an effect not described above, or may solve only some of the described problems or produce only some of the described effects.

### REFERENCE SIGNS LIST

1 Motor
2 Stator
3 Rotor
5 Stator core
5a Inner peripheral surface
6 Bobbin
7 Coil
18 Protrusion
19 Slot
20 Slot portion
20a1 Nearest portion
20a2 Nearest portion
21 Coil end portion
21a Surface
22 Coil
22a First coil portion
22b Second coil portion
23 Slot portion
24 Coil end portion
25 Uneven portion
26 Uneven portion
27 Coil
27a First coil portion
27b Second coil portion
28 Slot portion
28a1 Nearest portion
28a2 Nearest portion
29 Coil end portion
29a Surface
34 Uneven portion
35 Uneven portion
AX Rotation axis
BP Boundary portion
D Shortest distance
DS Dead space
DS1 Dead space
DS2 Dead space
G Gap
HP Surface
L Straight line
OL1 Outer shape
OL2 Outer shape
OL3 Outer shape
OL4 Outer shape
OL5 Outer shape
R Distance
S Air core portion
W Conductive wire
WD1 Winding direction
WD2 Winding direction
WE1 End portion
WE2 End portion
WM Intermediate position

## Claims

1. A motor comprising:
a stator core including a plurality of protrusions; and
a plurality of coils mounted on the plurality of protrusions in a concentrated winding manner, wherein:
each of the coils
is formed by winding a conductive wire in a plurality of layers by regular winding,
includes a slot portion accommodated in a slot of the stator core, and
a coil end portion disposed outside the slot; and
an arrangement of the conductive wire in a cross section perpendicular to a wiring direction of the conductive wire in the slot portion is different from an arrangement of the conductive wire in the cross section in the coil end portion, and an outer shape of the cross section in the slot portion is different from an outer shape of the cross section in the coil end portion.

2. The motor according to claim 1, further comprising a rotor that rotates around a rotation axis, wherein
each of the coils
includes a pair of the slot portions disposed to face each other in a circumferential direction around the rotation axis, and
is configured such that, when viewed in a cross section perpendicular to the rotation axis, a radially inner surface of the coil end portion is located radially outside a straight line connecting a portion of the slot portion on one side closest to the rotation axis and a portion of the slot portion on the other side closest to the rotation axis.

3. The motor according to claim 2, wherein each of the coils is configured such that a shortest radial distance between the coil end portion and the rotation axis is greater than a radial distance between an inner peripheral surface of the stator core and the rotation axis.

4. The motor according to claim 3, wherein when viewed in a cross section perpendicular to the rotation axis, at least part of the straight line connecting a portion of the slot portion on one side closest to the rotation axis and a portion of the slot portion on the other side closest to the rotation axis is located radially inside an inner peripheral surface of the stator core.

5. The motor according to any one of claims 1 to 4, wherein each of the coils is configured such that the arrangement of the slot portion and the arrangement of the coil end portion are common to each other in a part and differ from each other in another portion other than the part.

6. The motor according to claim 5, further comprising a rotor that rotates around a rotation axis, wherein
each of the coils is configured such that the other portion is disposed in the vicinity of an end portion on the rotation axis side in the arrangement of the slot portion and the arrangement of the coil end portion.

7. The motor according to claim 1, wherein:
each of the coils includes
a first coil portion formed by winding a first conductive wire portion from an end portion on one side to a predetermined intermediate position of the conductive wire in a first winding direction with the predetermined intermediate position as a starting point, and
a second coil portion formed by winding a second conductive wire portion from an end portion on the other side to the predetermined intermediate position of the conductive wire in a second winding direction opposite to the first winding direction with the predetermined intermediate position as a starting point;
the end portion on one side and the end portion on the other side of the conductive wire are drawn out from the layer on the outer periphery of the coil; and
the first coil portion and the second coil portion are adjacent to each other via a boundary portion inclined with respect to a plane perpendicular to an axis direction of the coil.

8. The motor according to claim 7, wherein each of the coils is configured such that a first uneven portion formed by an arrangement of the conductive wire of the first coil portion and a second uneven portion formed by an arrangement of the conductive wire of the second coil portion are fitted to each other at the boundary portion.

9. The motor according to claim 7 or 8, wherein
each of the coils
is an air-core coil, and
is configured such that at least part of one of the first coil portion or the second coil portion is interposed between the other coil portion and an air core portion.

10. The motor according to claim 1 or 7, wherein
the conductive wire is a round wire, and
each of the coils is formed into a shape corresponding to the slot by plastic deformation of the conductive wire by pressurization.

11. A motor comprising:
a stator core including a plurality of protrusions; and
a plurality of coils mounted on the plurality of protrusions in a concentrated winding manner, wherein
each of the coils
is formed by winding a conductive wire in a plurality of layers by regular winding;
each of the coils includes
a first coil portion formed by winding a first conductive wire portion from an end portion on one side to a predetermined intermediate position of the conductive wire in a first winding direction with the predetermined intermediate position as a starting point, and
a second coil portion formed by winding a second conductive wire portion from an end portion on the other side to the predetermined intermediate position of the conductive wire in a second winding direction opposite to the first winding direction with the predetermined intermediate position as a starting point;
the end portion on one side and the end portion on the other side of the conductive wire are drawn out from the layer on the outer periphery of the coil; and
the first coil portion and the second coil portion are adjacent to each other via a boundary portion inclined with respect to a plane perpendicular to an axis direction of the coil.

12. A method of manufacturing a motor including a stator core having a plurality of protrusions, and a plurality of coils mounted on the plurality of protrusions in a concentrated winding manner, the method comprising the step of
forming each of the coils by winding a conductive wire in a plurality of layers by regular winding such that an arrangement of the conductive wire in a cross section perpendicular to a wiring direction of the conductive wire in a slot portion accommodated in a slot of the stator core and an arrangement of the conductive wire in the cross section in a coil end portion disposed outside the slot are different from each other, and an outer shape of the cross section of the slot portion and an outer shape of the cross section of the coil end portion are different from each other.

13. A method of manufacturing a motor including a stator core having a plurality of protrusions, and a plurality of coils mounted on the plurality of protrusions in a concentrated winding manner, the method comprising the steps of:
forming a first coil portion by winding a first conductive wire portion from an end portion on one side to a predetermined intermediate position of a conductive wire in a plurality of layers by regular winding in a first winding direction with the predetermined intermediate position as a starting point;
forming a second coil portion by winding a second conductive wire portion from an end portion on the other side to the predetermined intermediate position of the conductive wire in a plurality of layers by regular winding in a second winding direction opposite to the first winding direction with the predetermined intermediate position as a starting point, and winding the second conductive wire portion so as to be adjacent to the first coil portion via a boundary portion inclined with respect to a plane perpendicular to an axis direction of the coil; and
drawing out the end portion on the one side and the end portion on the other side of the conductive wire from the layer on the outer periphery of the coil.
